Europäisches Patentamt

European Patent Office

Office européen des brevets

(11) Numéro de publication : **0 488 983 A1**

# (12) DEMANDE DE BREVET EUROPEEN

(21) Numéro de dépôt : **91870188.9**

(22) Date de dépôt : **26.11.91**

(51) Int. Cl.$^5$ : **B01D 29/03,** B01D 29/44,
B01D 29/64

(30) Priorité : **29.11.90 BE 9001139**

(43) Date de publication de la demande :
**03.06.92 Bulletin 92/23**

(84) Etats contractants désignés :
**AT CH DE DK ES FR GB IT LI LU NL SE**

(71) Demandeur : **Ets JOSKIN S.A.**
**39, Rue de Wergifosse**
**B-4634 Soumagne (BE)**

(72) Inventeur : **Joskin, Victor**
**rue de Wergifosse 39**
**B-4634 Soumagne (BE)**

(74) Mandataire : **Dellicour, Paul**
**Office de Brevets E. Dellicour rue Fabry 18/012**
**B-4000 Liège (BE)**

(54) **Filtre à lisier ou autre liquide.**

(57) Le filtre à lisier ou autre liquide, contenant des particules solides ou fibreuses, consiste en une boîte filtrante (1) comportant une grille fixe (2) et une grille à mouvement alternatif (4,5), et le lisier ou autre liquide est aspiré dans ladite boîte filtrante (1) entre ladite grille fixe (2) et le mouvement de ladite grille alternative (4,5). La grille fixe (2) est constituée de barreaux (3) en forme de demi-lune.

FIG. 1

EP 0 488 983 A1

La présente invention concerne le filtrage de lisier ou de tout autre liquide contenant des particules solides ou fibreuses comme de la paille ou de l'herbe et est relative à un filtre à lisier ou autre liquide.

Dans le cas du lisier en particulier le but de l'invention est d'éviter un maximum de paille, d'herbe ou de déchets solides dans le liquide à épandre.

On connaît déjà divers systèmes de filtres à lisier mais l'objet de l'invention réside, d'une part, dans le système d'arrivée et, d'autre part, dans les grilles servant au filtrage.

Un filtre à lisier ou autre liquide suivant l'invention est caractérisé en ce qu'il consiste en une boîte filtrante comportant une grille fixe et une grille à mouvement alternatif, et en ce que le lisier ou autre liquide est aspiré dans ladite boîte filtrante entre ladite grille fixe et le mouvement de ladite grille alternative.

Suivant l'invention la grille fixe est constituée de barreaux en forme de demi-lune et la grille alternative est constituée d'un axe rotatif, sur lequel sont montés des barreaux disposés en éventail destinés à se déplacer entre les barreaux de la grille fixe.

L'invention est décrite maintenant avec plus de détails sur la base des dessins schématiques annexés, à titre d'exemple uniquement, montrant en :

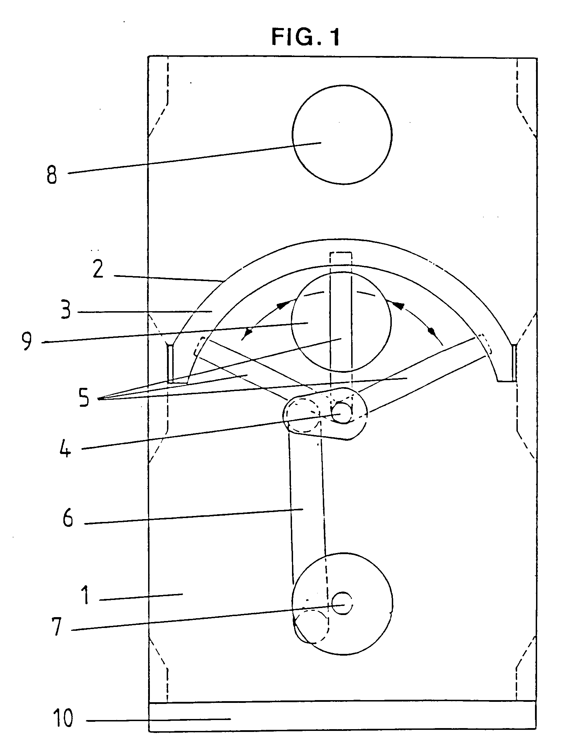

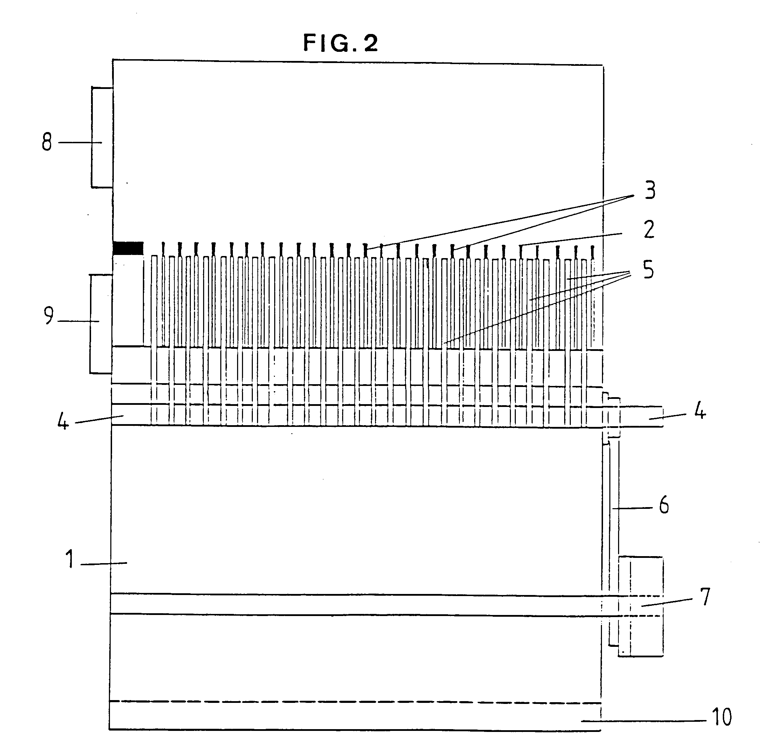

Figures 1 et 2 respectivement une coupe transversale et une coupe longitudinale dans un filtre à lisier ou autre liquide réalisé suivant l'invention.

Comme on le voit aux dessins le filtre consiste en une boîte filtrante 1 renfermant une grille fixe 2, dont les barreaux 3 sont en forme de demi-lune, et une grille alternative constituée d'un axe alternatif 4 sur lequel sont disposés en éventail des barreaux 5.

L'axe alternatif 4 fait saillie hors de la boîte filtrante, où il est relié par un système de bielles 6 à l'axe 7 d'un moteur hydraulique ou autre pour provoquer son mouvement alternatif de va-et-vient (flèches x).

Au-dessus de la grille fixe 2 est prévu un orifice de sortie 8 pour le liquide filtré vers une cuve ou une pompe, alors qu'un orifice d'entrée 9 pour le lisier ou autre liquide à filtrer est prévu entre la grille fixe 2 et l'axe alternatif 4 de la grille alternative.

Dans le bas la boîte filtrante 1 est pourvue d'une porte 10 à ouverture et fermeture hydraulique pour l'évacuation des corps étrangers.

Le principe de fonctionnement d'un tel filtre est le suivant : le liquide à filtrer, lisier ou autre, est pompé et entre dans la boîte filtrante 1 par l'orifice d'entrée 9. La grille alternative 4,5, qui a un mouvement de va-et-vient, repousse les corps étrangers et fibreux dans le bas du filtre, d'où ils sont évacués par la porte hydraulique 10, qui permet d'enlever les déchets et de nettoyer le filtre.

Le liquide filtré est aspiré par l'orifice de sortie 8 à travers la grille fixe 2, qui est maintenue toujours propre du fait que les corps étrangers et fibreux se trouvant dans le bas du filtre sont retenus hors de portée d'aspiration du liquide par le mouvement alternatif de la grille 4,5.

## Revendications

1. Filtre à lisier ou autre liquide, contenant des particules solides ou fibreuses, caractérisé en ce qu'il consiste en une boîte filtrante (1) comportant une grille fixe (2) et une grille à mouvement alternatif (4,5) et en ce que le lisier ou autre liquide est aspiré dans ladite boîte filtrante (1) entre ladite grille fixe (2) et le mouvement de ladite grille alternative (4,5).

2. Filtre à lisier ou autre liquide suivant la revendication 1, caractérisé en ce que la grille fixe (2) est constituée de barreaux (3) en forme de demi-lune.

3. Filtre à lisier ou autre liquide suivant les revendications 1 et 2, caractérisé en ce que la grille alternative est constituée d'un axe alternatif (4), sur lequel sont montés des barreaux (5) disposés en éventail destinés à se déplacer entre les barreaux (3) de la grille fixe (2).

4. Filtre à lisier ou autre liquide suivant les revendications 1 à 3, caractérisé en ce que l'entrée (9) du lisier ou autre liquide est disposée sous les barreaux (3) en demi-lune et au-dessus de l'axe alternatif (4) de la grille alternative.

5. Filtre à lisier ou autre liquide suivant une ou plusieurs des revendications 1 à 4, caractérisé en ce que la sortie (8) du liquide filtré se trouve au-dessus de la grille fixe (2).

6. Filtre à lisier ou autre liquide suivant une ou plusieurs des revendications 1 à 5, caractérisé en ce que le bas de la boîte filtrante (1) est pourvu d'une porte (10) à ouverture et fermeture hydraulique permettant d'évacuer de ladite boîte les corps étrangers.

# FIG. 1

# FIG. 2

EP 0 488 983 A1

**Office européen des brevets**

# RAPPORT DE RECHERCHE EUROPEENNE

Numero de la demande

EP    91 87 0188

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-8 404 293 (HELLMAN) <br> * page 2, ligne 23 - ligne 40 * | 1-3 | B01D29/03 <br> B01D29/44 |
| Y | * page 3 - page 6 * <br> --- | 4-6 | B01D29/64 |
| Y | US-A-1 687 428 (L.O.CORKRAN) <br> * page 1 - page 2 * <br><br> ----- | 4-6 | |

**DOMAINES TECHNIQUES RECHERCHES (Int. Cl.5)**

B01D

Le présent rapport a été établi pour toutes les revendications

| Lieu de la recherche | Date d'achèvement de la recherche | Examinateur |
|---|---|---|
| LA HAYE | 14 FEVRIER 1992 | DE PAEPE P.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

5